# EUROPEAN PATENT SPECIFICATION

(11) **EP 3 834 587 B1**
(45) Date of publication and mention of the grant of the patent: **11.05.2022**
(21) Application number: 19742088.8
(22) Date of filing: 09.07.2019
(51) Int. Cl.: H04W 76/15, H04W 36/00

(54) **IDENTIFYING TWO TUNNELS SET UP IN ONE PROTOCOL DATA UNIT SESSION**
IDENTIFIZIERUNG VON ZWEI IN EINER PROTOKOLLDATENEINHEITSSITZUNG EINGERICHTETEN TUNNELN
IDENTIFICATION DE DEUX TUNNELS ÉTABLIS DANS UNE SESSION D'UNE UNITÉ DE DONNÉES DE PROTOCOLE

(30) Priority: 10.08.2018 US 201862717598 P
(43) Date of publication of application: 16.06.2021
(73) Proprietor: TELEFONAKTIEBOLAGET LM ERICSSON (PUBL), 164 83 Stockholm (SE)
(72) Inventor: SHI, Nianshan, 176 74 JÄRFÄLLA (SE); ISRAELSSON, Martin, 163 41 Spånga (SE)
(74) Representative: Ericsson
(86) International application number: PCT/SE2019/050678
(87) International publication number: WO 2020/032853

(56) References cited:
- HUAWEI: "PDCP duplication with more than 2 copies", 3GPP DRAFT; R3-190860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Athens, Greece; 20180225 - 20180301 1 March 2018 (2018-03-01), XP051604794, Retrieved from the Internet: URL:http://www.3gpp.org/ftp/tsg%5Fran/WG3% 5FIu/TSGR3%5F103/Docs/R3%2D190860%2Ezip [retrieved on 2018-03-01]
- ERICSSON: "Modify the two NG-U tunnels per PDU session at the same time", 3GPP DRAFT; R3-186890, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Spokane, U.S.A; 20181112 - 20181116 11 November 2018 (2018-11-11), XP051558643, Retrieved from the Internet: URL:http://www.3gpp.org/ftp/Meetings%5F3GP P%5FSYNC/RAN3/Docs/R3%2D186890%2Ezip [retrieved on 2018-11-11]
- ZTE: "Further Discussion and pCR on Mode Change between Single and Two NG-U tunnels", 3GPP DRAFT; R3-174304 FURTHER DISCUSSION AND PCR ON MODE CHANGE BETWEEN SINGLE AND TWO NG-U TUNNELS V2, 3RD GENERATION PARTNERSHIP PROJECT (3GPP), MOBILE COMPETENCE CENTRE ; 650, ROUTE DES LUCIOLES ; , vol. RAN WG3, no. Reno, USA; 20171201 17 November 2017 (2017-11-17), XP051373032, Retrieved from the Internet: URL:http://www.3gpp.org/ftp/tsg%5Fran/WG3% 5FIu/TSGR3%5F98/Docs/ [retrieved on 2017-11-17]

## Description

### TECHNICAL FIELD

The present disclosure relates to wireless communications, and in particular, to identification of two tunnels that have been set up in one protocol data unit (PDU) session.

### BACKGROUND

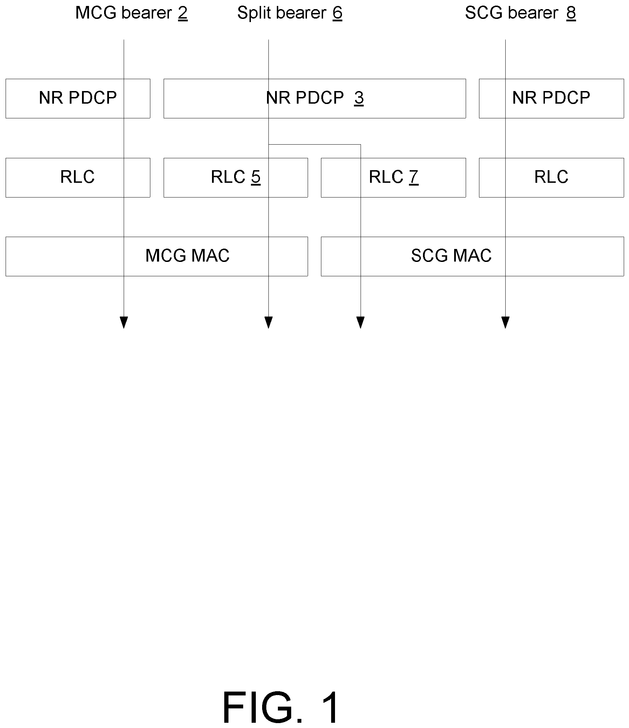

The Third Generation Partnership Project (3GPP) release 15 introduces New Radio (NR) and the dual connectivity from earlier releases is expanded to cover the dual connectivity between Long Term Evolution (LTE) node and NR node, or between two NR nodes, as shown in FIG. 1. Further, one PDU session may be split in user plane function (UPF), so one part of the PDU session goes via one node and the rest of the PDU session goes via another node. For example, FIG. 1 shows a Master Cell Group (MCG) bearer 2, a split bearer 6 and a Secondary Cell Group (SCG) bearer 8. The split bearer 6 serves both a first tunnel and a second tunnel when the PDU session is split in a UPF. (Note that in FIG. 1 it is implicit that a security key (KeNB or S-KeNB) is configurable per bearer.) In FIG. 1, a first NR node includes a New Radio (NR) Packet Data Convergence Protocol (PDCP), a radio link control (RLC) and an MCG medium access control (MAC). A second NR node includes an NR PDCP, RLC and an SCG MAC.

With NR, the PDU session contains quality of service (QoS) flows. The QoS flows are mapped by the radio access network (RAN) into radio bearers and there is not a one to one mapping between the QoS flows and the radio bearers.

When the PDU session is split in a user plane function (UPF), two tunnels will be set up for the same PDU session. In the uplink (UL), the two tunnels will end in the same UPF, and in the downlink (DL), one tunnel will end in a master (M)- next generation (NG)-RAN node, and another will end in a secondary (S)-NG-RAN node. In the current 3GPP specification, there is not a way to identify the two tunnels. The two tunnels are set up and a Fifth Generation Core (5GC) can initiate a modification on the existing PDU sessions as well as the UL tunnel information. The NG-RAN node could also initiate a modification of the DL tunnel information. But it is not possible to identify, in case the two tunnels have been setup for the PDU session, which tunnel information is going to be modified.

Another problem when using "Additional PDU Session Resource" and "Additional Transport Layer Information" in the specification is that if two tunnels are set up, it is probably clear that the first one set up would be the "first" and the second one is "additional". But when the first is removed, the "Additional" one would be the only tunnel left. And if later, a new second tunnel is set up, it is unclear which one is first and which one is "Additional".

The document by HUAWEI: "PDCP duplication with more than 2 copies"; 3GPP DRAFT, R3-190860, 3RD GENERATION PARTNERSHIP PROJECT (3GPP); Athens, Greece; 1 March 2018 (2018-03-01); XP051604794; URL: http://www.3gpp.org/ftp/tsg%5Fran/WG3%5FIu/TSGR3%5F103/ Docs/R3%2D190860%2Ezip, broaches the general technical issue of identifying two tunnels set up for the same PDU session, when said PDU session is split in a UPF.

### SUMMARY

The invention is defined by the appended claims.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a diagram for illustrating dual connectivity between two NR nodes;
FIG. 2 is a schematic diagram of an exemplary network architecture illustrating a communication system connected via an intermediate network to a host computer according to the principles in the present disclosure;
FIG. 3 shows a first example exchange of information between a 5GC and an NG-RAN, initiated by the 5GC;
FIG. 4 shows a second example exchange of information between a 5GC and an NG-RAN, initiated by the 5GC;
FIG. 5 shows an example exchange of information between a NG-RAN and a 5GC, initiated by the NG-RAN;
FIG. 6 is a block diagram of a host computer communicating via a radio network node with a wireless device and a core network node communicating with the radio network node over at least partially wireless connections according to some embodiments of the present disclosure;
FIG. 7 is a flow chart illustrating exemplary methods implemented in a communication system including a host computer, a radio network node and a wireless device for executing a client application at a wireless device according to some embodiments of the present disclosure;
FIG. 8 is a flow chart illustrating exemplary methods implemented in a communication system including a host computer, a radio network node and a wireless device for receiving user data at a wireless device according to some embodiments of the present disclosure;
FIG. 9 is a flow chart illustrating exemplary methods implemented in a communication system including a host computer, a radio network node and a wireless device for receiving user data from a wireless device at a host computer according to some embodiments of the present disclosure;
FIG. 10 is a flow chart illustrating exemplary methods implemented in a communication system including a host computer, a network node and a wireless device for receiving user data at a host computer according to some embodiments of the present disclosure;
FIG. 11 is a flowchart of an exemplary process in a radio network node according to some embodiments of the present disclosure; and
FIG. 12 is a flowchart of an exemplary process in a core network node according to some embodiments of the present disclosure.

### DETAILED DESCRIPTION

Before describing in detail exemplary embodiments, it is noted that the embodiments reside primarily in combinations of apparatus components and processing steps related to identification of two tunnels that have been set up in one protocol data unit (PDU) session. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "base station" used herein can be any kind of base station comprised in a radio network which may further comprise any of a base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, integrated access and backhaul (IAB) node, donor node controlling relay, radio access point (AP), transmission points, transmission nodes, Remote Radio Unit (RRU) Remote Radio Head (RRH), a core node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc.

In some embodiments, the non-limiting terms wireless device (WD) or a user equipment (UE) are used interchangeably. The WD herein can be any type of wireless device capable of communicating with a radio network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Note that in some embodiments, similar functions may be performed at either one or both of a radio network node and a wireless device. Either the radio network node or the wireless device, or both, may be referred to as a network node herein. Thus, as explained below, a network node, whether it be a radio network node or a wireless device, may identify first and second tunnels when a protocol data unit, PDU, session is split in a user plane function, UPF, into two transport tunnels. The radio network node performs the identification for tunnels received on the uplink and the wireless device performs the identification for tunnels received on the downlink. Note further, that the functions of identification can be performed for sidelink communications where one WD communicates directly with another WD.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments make it possible to identify the tunnels when the PDU session is split in user plane function (UPF) into two transport tunnels. Some embodiments also provide solutions for future expansion. Note that examples herein, unless explicitly mentioned otherwise, may be based on the Base Line CR R3-184387 which represents the agreed changes towards the 3GPP technical standard (TS) 38.413 v. 15.0.0. Some embodiments make it possible for a NG-RAN node to be able to operate when the PDU session is split in the UPF, and there are multiple user plan tunnels for the same PDU session.

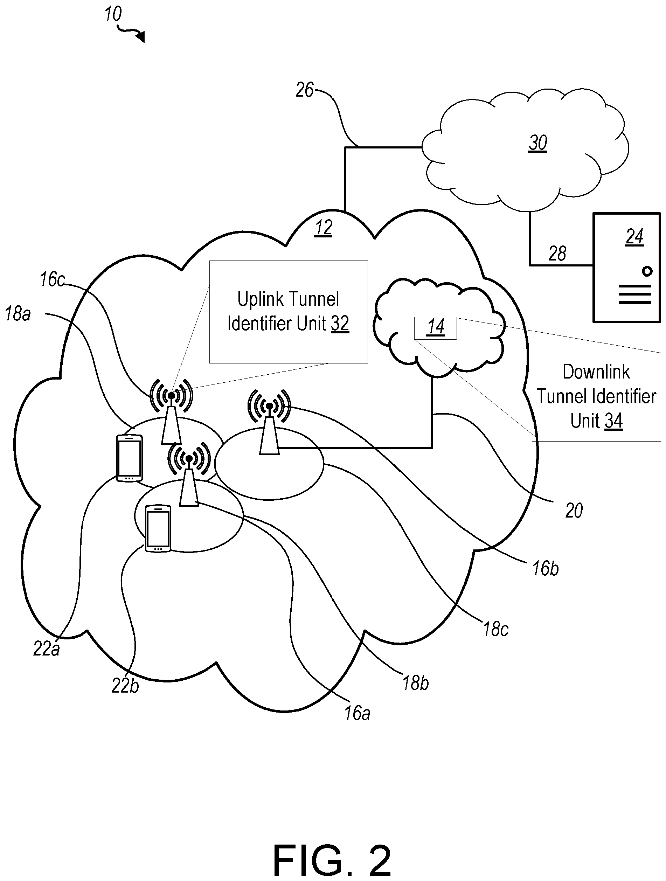

Returning to the drawing figures, in which like elements are referred to by like reference numerals, there is shown in FIG. 2 a schematic diagram of a communication system 10, according to an embodiment, such as a 3GPP-type cellular network that may support standards such as LTE and/or NR (G), which comprises an access network 12, such as a radio access network, and a core network having a core network node 14. The access network 12 comprises a plurality of radio network nodes 16a, 16b, 16c (referred to collectively as radio network nodes 16), such as NBs, eNBs, gNBs or other types of wireless access points, each defining a corresponding coverage area 18a, 18b, 18c (referred to collectively as coverage areas 18). Each radio network node 16a, 16b, 16c is connectable to the core network having a core network node 14, such as a 5G core network node, over a wired or wireless connection 20. A first wireless device (WD) 22a located in coverage area 18a is configured to wirelessly connect to, or be paged by, the corresponding radio network node 16c. A second WD 22b in coverage area 18b is wirelessly connectable to the corresponding radio network node 16a. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding radio network node 16. Note that although only two WDs 22 and three radio network nodes 16 are shown for convenience, the communication system may include many more WDs 22 and radio network nodes 16.

Also, it is contemplated that a WD 22 can be in simultaneous communication and/or configured to separately communicate with more than one radio network node 16 and more than one type of radio network node 16. For example, a WD 22 can have dual connectivity with a radio network node 16 that supports LTE and the same or a different network node 16 that supports NR. As an example, WD 22 can be in communication with an eNB for LTE/E-UTRAN and a gNB for NR/NG-RAN

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider or may be operated by the service provider or on behalf of the service provider. The connections 26, 28 between the communication system 10 and the host computer 24 may extend directly from the core network having the core network node 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 2 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network having the core network node 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a radio network node 16 may not or need not be informed about the past routing of an incoming downlink communication with data originating from a host computer 24 to be forwarded (e.g., handed over) to a connected WD 22a. Similarly, the radio network node 16 need not be aware of the future routing of an outgoing uplink communication originating from the WD 22a towards the host computer 24.

A radio network node 16 is configured to include an uplink tunnel identifier unit 32 which is configured to identify first and second tunnels when a protocol data unit, PDU, session is split in a user plane function, UPF, into two transport tunnels. A core network node 14 is configured to include a downlink tunnel identifier unit 34 which is configured to identify first and second tunnels when a protocol data unit, PDU, session is split in a user plane function, UPF, into two transport tunnels.

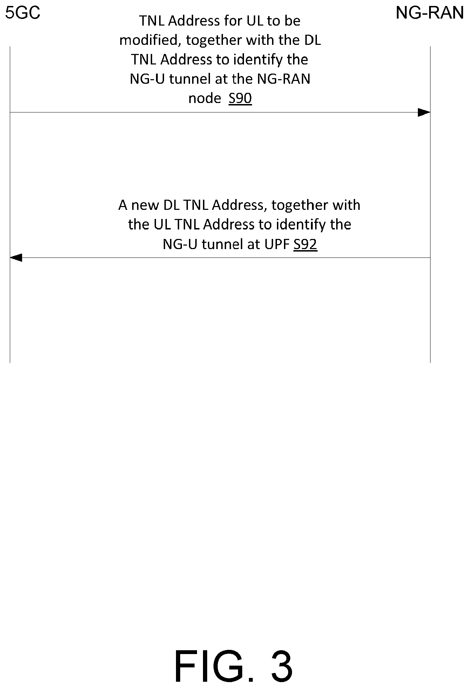

FIG. 3 illustrates one example exchange of information between a 5GC such as core network node 14 and an NG-RAN such as radio network node 16. In this example, the 5GC transmits: a TNL address for the uplink to be modified together with the downlink TNL address to identify the NG-U tunnel at the NG-RAN node (Block S900). In reply, a new DL TNL Address, together with the UL TNL Address to identify the NG-U tunnel at UPF is sent from the NG-RAN to the 5GC (Block S92). Thus, when there are multiple tunnels de4ployed for the same PDU session, then, when one node needs to modify the TNL Address, a pair of TNL Addresses is sent, where one address of the pair is the new address at the sender side plus the TNL address assigned at the receiver side. This informs the receiver side which tunnel is impacted.

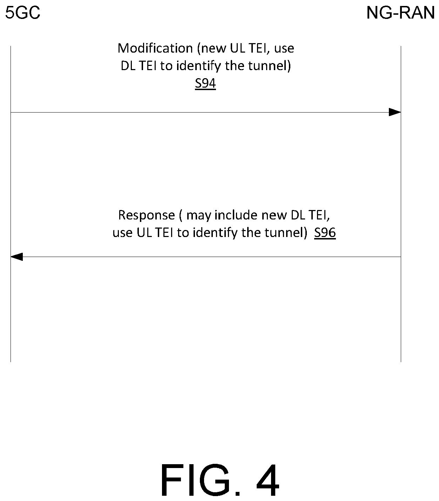

FIG. 4 illustrates another example exchange of information between the 5GC and the NG-RAN. In the example of FIG. 4, the 5GC initiates a communication by transmitting to the NG-RAN a modification message for a new uplink tunnel (UL) endpoint identifier (TEI) using the DL TEI to identify the tunnel (Block S94). In response, the NG-RAN transmits a response message that may include a new DL TEI and may use an UL TEI to identify the tunnel (Block S96).

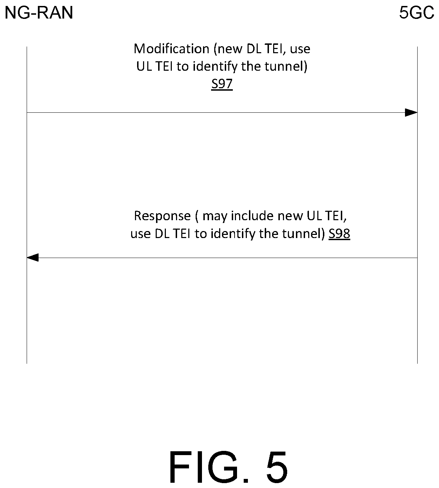

FIG. 5 illustrates another example exchange of information between the NG-RAN and the 5GC. In the example of FIG. 5, the NG-RAN initiates a communication by transmitting to the 5GC a modification message for a new DL TEI using the UL TEI to identify the tunnel (Block S97). In response, the 5GC transmits a response message that may include a new UL TEI and may use a DL TEI to identify the tunnel. (Block S98).

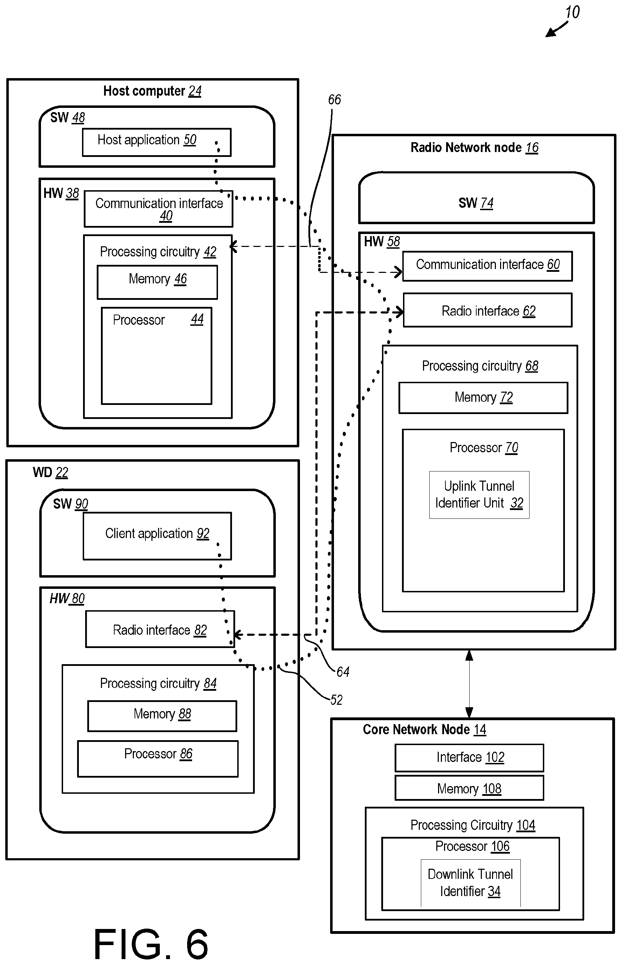

Example implementations, in accordance with an embodiment, of the WD 22, radio network node 16 and host computer 24 discussed in the preceding paragraphs will now be described with reference to FIG. 6. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the radio network node 16 and or the wireless device 22.

The communication system 10 further includes a radio network node 16 provided in a communication system 10 and comprising hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the radio network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network having a core network node 14 of the communication system 10 and/or through one or more intermediate networks 30 outside the communication system 10.

In the embodiment shown, the hardware 58 of the radio network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the radio network node 16 further has software 74 stored internally in, for example, memory 72, or stored in external memory (e.g., database, storage array, network storage device, etc.) accessible by the radio network node 16 via an external connection. The software 74 may be executable by the processing circuitry 68. The processing circuitry 68 may be configured to control any of the methods and/or processes described herein and/or to cause such methods, and/or processes to be performed, e.g., by radio network node 16. Processor 70 corresponds to one or more processors 70 for performing radio network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to radio network node 16. For example, processing circuitry 68 of the radio network node 16 may include uplink tunnel identifier unit 32 configured to identify first and second tunnels when a protocol data unit, PDU, session is split in a user plane function, UPF, into two transport tunnels.

The communication system 10 further includes the WD 22 already referred to. The WD 22 may have hardware 80 that may include a radio interface 82 configured to set up and maintain a wireless connection 64 with a radio network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. In some embodiments, the inner workings of the radio network node 16, WD 22, and host computer 24 may be as shown in FIG. 6 and independently, the surrounding network topology may be that of FIG. 2.

In FIG. 6, the OTT connection 52 has been drawn abstractly to illustrate the communication between the host computer 24 and the wireless device 22 via the radio network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the radio network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the radio network node 16, and it may be unknown or imperceptible to the radio network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the radio network node 16 with a radio interface 62. In some embodiments, the radio network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a radio network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the radio network node 16, and/or preparing/terminating/maintaining/supporting/ ending in receipt of a transmission from the radio network node 16.

Core network node 14 may be configured to communicate wirelessly or by wireline with the radio network node 16 via the interface 102. The core network node 14 has a memory 108 configured to store computer instructions that cause a processor 106 of processing circuitry 104 to perform functions of a downlink tunnel identifier 34. Downlink tunnel identifier 34 may be configured to identify first and second tunnels when a protocol data unit, PDU, session is split in a user plane function, UPF, into two transport tunnels.

In some embodiments, the radio network node 16 transmits to the core network node 14 a first message that includes a Transport Network Layer, TNL, address for a downlink tunnel. In reply, the core network node 14 sends a reply message that includes an uplink, UL, transport layer address corresponding to the TNL address for the downlink tunnel.

Although FIGS. 2 and 6 show various "units" such as uplink tunnel identifier unit 32, and downlink tunnel identifier unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

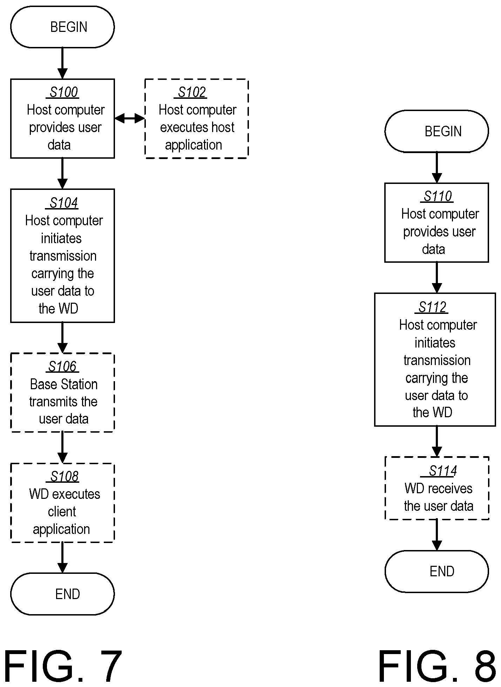

FIG. 7 is a flowchart illustrating an exemplary method implemented in a communication system, such as, for example, the communication system of FIGS. 2 and 6, in accordance with one embodiment. The communication system may include a host computer 24, a radio network node 16 and a WD 22, which may be those described with reference to FIG. 6. In a first step of the method, the host computer 24 provides user data (block S 100). In an optional substep of the first step, the host computer 24 provides the user data by executing a host application, such as, for example, the host application 50 (block S102). In a second step, the host computer 24 initiates a transmission carrying the user data to the WD 22 (block S104). In an optional third step, the radio network node 16 transmits to the WD 22 the user data which was carried in the transmission that the host computer 24 initiated, in accordance with the teachings of the embodiments described throughout this disclosure (block S106). In an optional fourth step, the WD 22 executes a client application, such as, for example, the client application 114, associated with the host application 50 executed by the host computer 24 (block S108).

FIG. 8 is a flowchart illustrating an exemplary method implemented in a communication system, such as, for example, the communication system of FIG. 2, in accordance with one embodiment. The communication system may include a host computer 24, a radio network node 16 and a WD 22, which may be those described with reference to FIGS. 2 and 6. In a first step of the method, the host computer 24 provides user data (block S110). In an optional substep (not shown) the host computer 24 provides the user data by executing a host application, such as, for example, the host application 50. In a second step, the host computer 24 initiates a transmission carrying the user data to the WD 22 (block S112). The transmission may pass via the radio network node 16, in accordance with the teachings of the embodiments described throughout this disclosure. In an optional third step, the WD 22 receives the user data carried in the transmission (block S114).

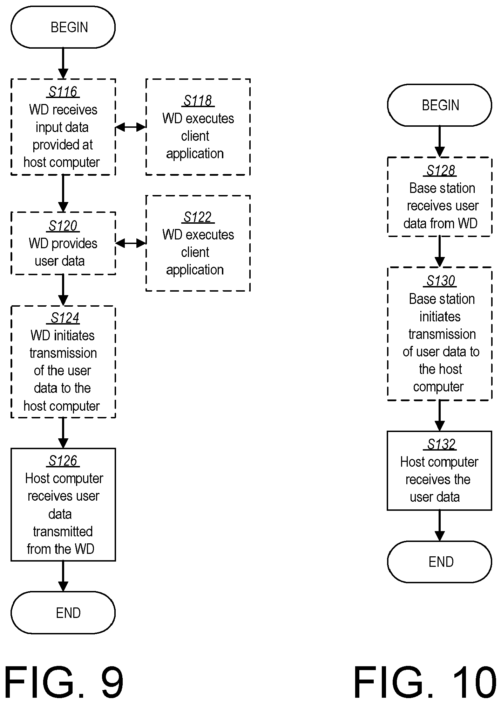

FIG. 9 is a flowchart illustrating an exemplary method implemented in a communication system, such as, for example, the communication system of FIG. 2, in accordance with one embodiment. The communication system may include a host computer 24, a radio network node 16 and a WD 22, which may be those described with reference to FIGS. 2 and 6. In an optional first step of the method, the WD 22 receives input data provided by the host computer 24 (block S116). In an optional substep of the first step, the WD 22 executes the client application 114, which provides the user data in reaction to the received input data provided by the host computer 24 (block S118). Additionally, or alternatively, in an optional second step, the WD 22 provides user data (block S120). In an optional substep of the second step, the WD provides the user data by executing a client application, such as, for example, client application 114 (block S122). In providing the user data, the executed client application 114 may further consider user input received from the user. Regardless of the specific manner in which the user data was provided, the WD 22 may initiate, in an optional third substep, transmission of the user data to the host computer 24 (block S124). In a fourth step of the method, the host computer 24 receives the user data transmitted from the WD 22, in accordance with the teachings of the embodiments described throughout this disclosure (block S126).

FIG. 10 is a flowchart illustrating an exemplary method implemented in a communication system, such as, for example, the communication system of FIG. 2, in accordance with one embodiment. The communication system may include a host computer 24, a radio network node 16 and a WD 22, which may be those described with reference to FIGS. 2 and 6. In an optional first step of the method, in accordance with the teachings of the embodiments described throughout this disclosure, the radio network node 16 receives user data from the WD 22 (block S128). In an optional second step, the radio network node 16 initiates transmission of the received user data to the host computer 24 (block S 130). In a third step, the host computer 24 receives the user data carried in the transmission initiated by the radio network node 16 (block S132).

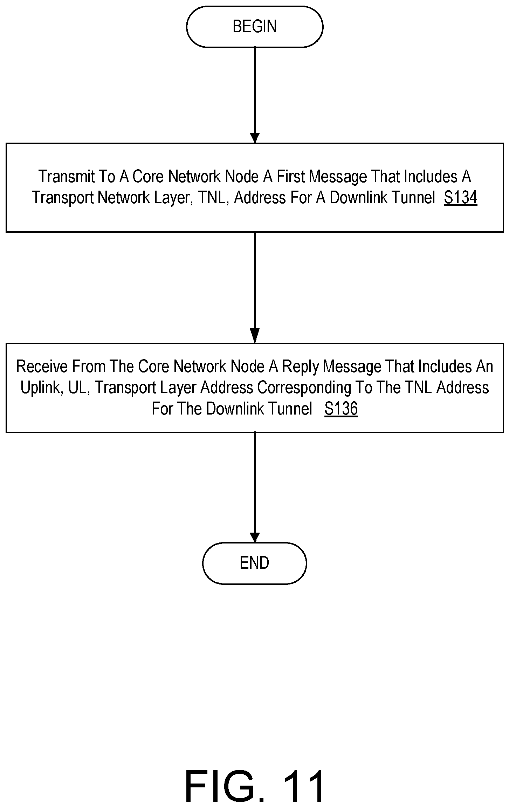

FIG. 11 is a flowchart of an exemplary process in a radio network node 16 for exchanging messages to establish two tunnels. One or more blocks described herein may be performed by one or more elements of radio network node 16 such as by one or more of processing circuitry 68 (including the uplink tunnel identifier unit 32), processor 70, radio interface 62 and/or communication interface 60. Network node 16 such as via processing circuitry 68 and/or processor 70 and/or radio interface 62 and/or communication interface 60 is configured to transmit to a core network node a first message that includes a Transport Network Layer, TNL, address for a downlink tunnel (Block S134) The process also includes receiving, via a downlink tunnel identifier unit 34, from the core network node a reply message that includes an uplink, UL, transport layer address corresponding to the TNL address for the downlink tunnel (Block S136).

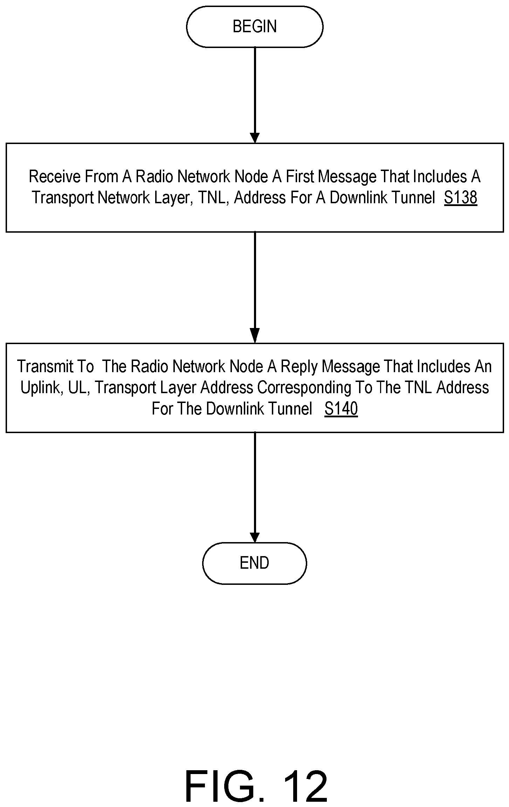

FIG. 12 is a flowchart of an exemplary process in a core network node 14. One or more blocks described herein may be performed by one or more elements of core network node 14 such as by one or more of processing circuitry 104 (including the downlink tunnel identifier unit 34), processor 106, interface 102 (which may interface with a wireless or wireline channel) Core network node 14 such as via processing circuitry 104 and/or processor 106 and/or interface 102 is configured to receive from a radio network node a first message that includes a Transport Network Layer, TNL, address for a downlink tunnel (Block S138). The process also includes transmitting to the radio network node a reply message that includes an uplink, UL, transport layer address corresponding to the TNL address for the downlink tunnel (Block S140).

Having described the general process flow of arrangements of the disclosure and having provided examples of hardware and software arrangements for implementing the processes and functions of the disclosure, the sections below provide details and examples of arrangements for identification of two tunnels that have been set up in one protocol data unit (PDU) session.

### Solution 1: During setting up of the tunnel, a tag is explicitly assigned

In this solution, during setup, an explicit tag or index is assigned to each tunnel. For example, Tunnel Index 1 is assigned to the first tunnel, and Tunnel Index 2 is assigned to the second tunnel. For example, a Tunnel Index and QoS Flow per TNL Information is introduced in Table 1.

**Table 1**

| IE/Group Name | Presence | Range | IE type and reference | Semantic description |
|---|---|---|---|---|
| UP Transport Layer Information | M | | 9.3.2.2 | |
| Associated QoS Flow List | | 1 | | |
| >Associated QoS Flow Item IEs | | *1.. <maxnoo fQoSFlows* > | | |
| >>QoS Flow Indicator | M | | 9.3.1.51 | |
| Tunnel Index | O | Integer (0..2) | | The tunnel Index identifies the tunnel per PDU session |

| Range bound | | Explanation | | |
|---|---|---|---|---|
| maxnoofQoSFlows | | Maximum no. of QoS flows allowed within one PDU session. Value is 64. | | |

The IE QoS Flow per TNL Information may be further used by the PDU session management procedure. The Tunnel Index may be used throughout the lifetime of the tunnel and identify the tunnel when needed or desired.

For example, when the fifth generation core (5GC) initiates the modification for the information element (IE), "UL NG-U UP TNL Information", it currently is not possible to tell for which tunnel the modification is requested. But if the Tunnel Index is added, then it is clear for which tunnel the new UL NG-U UP TNL Information is requested, as shown in Table 2.

**Table 2**

| IE/Group Name | Presence | Range | IE type and reference | Semantic description |
|---|---|---|---|---|
| Tunnel Index | O | Integer (0..2) | | The tunnel Index identifies the tunnel per PDU session |
| PDU Session Aggregate Maximum Bit Rate | O | | Bit Rate 9.3.1.4 | |
| UL NG-U UP TNL Information | O | | UP Transport Layer Information 9.3.2.2 | UPF endpoint of the NG-U transport bearer, for delivery of UL PDUs. |
| QoS Flow Add or Modify Request List | | 0..1 | | |
| >QoS Flow Add or Modify Request Item IEs | | *1.. <maxnoo fQoSFlows* > | | |
| >>QoS Flow Indicator | M | | 9.3.1.51 | |
| >>QoS Flow Level QoS Parameters | O | | 9.3.1.12 | The presence of this IE may need to be refined |
| >>E-RAB ID | O | | 9.3.2.3 | |
| QoS Flow to Release List | O | | QoS Flow List 9.3.1.13 | |

It is also possible to modify the structure to show that multiple tunnels are modified in one message, if a list is introduced with UL NG-U UP TNL Information and the Tunnel Index.

The parameter used to identify the tunnel can be introduced in other places, or with other definitions.

### Solution 2: use the existing parameter to uniquely identify the tunnel

The parameters which are associated with the tunnel can uniquely identify the tunnel. For example, the parameters can be the UL and/or DL TNL address that the tunnel is currently using, or quality of service flow identifications (QFIs) for the quality of service (QoS) flows that have been setup in the tunnel.

For example, the TNL Address may be used to identify the tunnel. The node can only modify the TNL address generated by itself. Thus, the TNL address at the other end of the tunnel can be used for that node to identify the tunnel.

If the 5GC NR core network node 14 acts to modify the UL NG-U UP TNL Information, it provides the DL NG-U UP TNL Information, so that the NG-RAN node understands that the 5GC wants to modify the Uplink tunnel for the tunnel identified by the DL NG-U UP TNL Information. Note that DL NG-U UP TNL Information belongs to the NG-RAN node and the 5GC cannot modify it.

Similarly, if the NG-RAN radio network node 16 wants to modify the DL NG-U UP TNL Information, it provides the UL NG-U UP TNL Information for 5GC to identify the tunnel.

Thus, an exchange of messages between the radio network node 16 and core network node 14 may occur in order to identify a pair of tunnels. To identify a downlink tunnel, the radio network node 16 transmits to the core network node 14 a first message that includes a Transport Network Layer, TNL, address for a downlink tunnel. To identify an uplink tunnel, the radio network node 16 receives from the core network node 14 a reply message that includes an uplink, UL, transport layer address corresponding to the TNL address for the downlink tunnel.

Refer to Table 3 and Table 4.

**Table 3**

| IE/Group Name | Presence | Range | IE type and reference | Semantic description |
|---|---|---|---|---|
| PDU Session Aggregate Maximum Bit Rate | O | | Bit Rate 9.3.1.4 | |
| UL NG-U UP TNL Information | O | | UP Transport Layer Information 9.3.2.2 | UPF endpoint of the NG-U transport bearer, for delivery of UL PDUs. |
| DL NG-U UP TNL Information | O | | UP Transport Layer Information 9.3.2.2 | This IE is used to identify the NG-U tunnel at NG-RAN node |
| QoS Flow Add or Modify Request List | | 0..1 | | |
| >QoS Flow Add or Modify Request Item IEs | | *1.. <maxno ofQoSFlo ws>* | | |
| >>QoS Flow Indicator | M | | 9.3.1.51 | |
| >>QoS Flow Level QoS Parameters | O | | 9.3.1.12 | The presence of this IE may need to be refined |
| >>E-RAB ID | O | | 9.3.2.3 | |
| QoS Flow to Release List | O | | QoS Flow List 9.3.1.13 | |

**Table 4**

| IE/Group Name | Presence | Range | IE type and reference | Semantic description |
|---|---|---|---|---|
| DL UP TNL Information | O | | UP TNL Information 9.3.2.1 | One or multiple RAN Transport Layer Information |
| UL NG-U UP TNL Information | O | | UP Transport Layer Information 9.3.2.2 | This IE is used to identify the NG-U tunnel at UPF |

It is possible to use other parameters which can uniquely identify the tunnel.

It is also possible to modify the structure so that, for example, multiple UL TNL Information can be changed in one message. See Table 5.

**Table 5**

| IE/Group Name | Presence | Range | IE type and reference | Semantics description |
|---|---|---|---|---|
| PDU Session Aggregate Maximum Bit Rate | O | | Bit Rate 9.3.1.4 | |
| UL NG-U UP TNL Information to be Modified List | | 0..1 | | |
| > UL NG-U UP TNL Information to be Modified Items | | 1.. <maxNo OfTunnelsP erPDUSessi on> | | |
| >>UL NG-U UP TNL Information | M | | UP Transport Layer Information 9.3.2.2 | UPF endpoint of the NG-U transport bearer, for delivery of UL PDUs. |
| >>DL NG-U UP TNL Information | M | | UP Transport Layer Information 9.3.2.2 | This IE is used to identify the NG-U tunnel at NG-RAN node |
| QoS Flow Add or Modify Request List | | 0..1 | | |
| >QoS Flow Add or Modify Request Item IEs | | *1.. <maxnoo fQoSFlows* > | | |
| >>QoS Flow Indicator | M | | 9.3.1.51 | |
| >>QoS Flow Level QoS Parameters | O | | 9.3.1.12 | The presence of this IE may need to be refined |
| >>E-RAB ID | O | | 9.3.2.3 | |
| QoS Flow to Release List | O | | QoS Flow List 9.3.1.13 | |

### Solution 3: specify rules to identify which one is the first and which one is the second tunnel (or additional tunnel).

If an explicit tag is not assigned from the setup, then a set of rules may be specified so all nodes know at any time which one is the first tunnel and which is the second tunnel. This information is used during modification.

The rule should also cover if the first tunnel is removed, then the second tunnel becomes the first tunnel, etc.

### Solution 4: define explicit IEs for each tunnel (with help of the rules).

In some embodiments, Explicit IEs are defined in the message so the tunnel and the IE has a one to one mapping.

For example, an IE may be introduced as follows: "Additional UL NG-U UP TNL Information." If the 5GC wants to modify the uplink tunnel information this information element may be specified. But then, the 5GC may work with certain rules so that all the nodes know which tunnel is the first tunnel and which tunnel is the additional tunnel.

Note that the above-described solutions could be combined to achieve clarity during the handling of multiple tunnels that are setup for the same PDU session.

Note also that the above-described solutions may be extended to other messages and procedures.

Thus, according to one aspect, a radio network node 16 includes processing circuitry 68 and an interface 60 or 62 configured to transmit to a core network node 14 a first message that includes a Transport Network Layer, TNL, address for a downlink tunnel. The processing circuitry 68 and interface 60 or 62 are further configured to receive from the core network node 14 a reply message that includes an uplink, UL, transport layer address corresponding to the TNL address for the downlink tunnel.

According to this aspect, in some embodiments, the processing circuitry 68 and interface 60 or 62 are further configured to receive in the reply message from the core network node 14 an indication of a mapping of TNL addresses to corresponding UL transport layer addresses. In some embodiments, the received UL transport layer address identifies a tunnel to the radio network node 16. In some embodiments, the first message includes a resource modification indication message that includes the TNL address. In some embodiments, the resource modification indication message includes UL NG-U UP TNL information. In some embodiments, the reply message includes a resource modify confirmation message that includes the UL transport layer address. In some embodiments, the resource modify confirmation message includes DL NG-U UP TNL information.

According to another aspect, a method implemented in a radio network node 16 to identify tunnels is provided. The method includes transmitting to a core network node 14 a first message that includes a Transport Network Layer, TNL, address for a downlink tunnel. The method further includes receiving from the core network node 14 a reply message that includes an uplink, UL, transport layer address corresponding to the TNL address for the downlink tunnel.

According to this aspect, in some embodiments, the method further includes receiving in the reply message from the core network node 14 an indication of a mapping of TNL addresses to corresponding UL transport layer addresses. In some embodiments, the received UL transport layer address identifies a tunnel to the radio network node 16. In some embodiments, the first message includes a resource modification indication message that includes the TNL address. In some embodiments, the resource modification indication message includes UL NG-U UP TNL information. In some embodiments, the reply message includes a resource modify confirmation message that includes the UL transport layer address. In some embodiments, the resource modify confirmation message includes DL NG-U UP TNL information.

According to yet another aspect, a core network node 14 having processing circuitry 104 and an interface 102 is provided. The processing circuitry 104 and interface 102 are configured to receive from a radio network node 16 a first message that includes a Transport Network Layer, TNL, address for a downlink tunnel; and transmit to the radio network node 16 a reply message that includes an uplink, UL, transport layer address corresponding to the TNL address for the downlink tunnel.

According to this aspect, in some embodiments, the reply message includes an indication of a mapping of TNL addresses to corresponding UL transport layer addresses. In some embodiments, the transmitted UL transport layer address identifies a tunnel to the radio network node 16. In some embodiments, the first message includes a resource modification indication message that includes the TNL address. In some embodiments, the resource modification indication message includes UL NG-U UP TNL information. In some embodiments, the reply message includes a resource modify confirmation message that includes the UL transport layer address. In some embodiments, the resource modify confirmation message includes DL NG-U UP TNL information.

According to yet another aspect, a method in a core network node 14 is provided. The method includes receiving (S138) from a radio network node 16 a first message that includes a Transport Network Layer, TNL, address for a downlink tunnel. The method also includes transmitting (S140) to the radio network node 16 a reply message that includes an uplink, UL, transport layer address corresponding to the TNL address for the downlink tunnel.

According to this aspect, in some embodiments, the reply message includes an indication of a mapping of TNL addresses to corresponding UL transport layer addresses. In some embodiments, the transmitted UL transport layer address identifies a tunnel to the radio network node 16. In some embodiments, the first message includes a resource modification indication message that includes the TNL address. In some embodiments, the resource modification indication message includes UL NG-U UP TNL information. In some embodiments, the reply message includes a resource modify confirmation message that includes the UL transport layer address. In some embodiments, the resource modify confirmation message includes DL NG-U UP TNL information.

Some embodiments include the following:
Embodiment A1. A network node configured to communicate with a wireless device (WD), the network node configured to, and/or comprising a radio interface and/or comprising processing circuitry configured to:
   identify first and second tunnels when a protocol data unit, PDU, session is split in a user plane function, UPF, into two transport tunnels, the identification being based on one of a tag assigned to each tunnel, parameters associated with each tunnel, a rule for identifying each tunnel and information elements, IEs, defined in a message that references at least one tunnel; and
   initiate at least one modification of tunnel information according to whether a tunnel is the first tunnel or the second tunnel.
Embodiment A2. The network node of Embodiment A1, wherein a tag is explicitly assigned at a time of creation of the first and second tunnels.
Embodiment A3. The network node of Embodiment A1, wherein the parameters include an uplink or downlink transport network layer, TNL
Embodiment A4. The network node of Embodiment A1, wherein the rule is specified at a time of creation of the first and second tunnels.
Embodiment A5. The network node of Embodiment A1, wherein the network node is a wireless device.
Embodiment A6. The network node of Embodiment A1, wherein the network node is a base station.
Embodiment B1. A method implemented in a network node, the method comprising:
   identifying first and second tunnels when a protocol data unit, PDU, session is split in a user plane function, UPF, into two transport tunnels, the identification being based on one of a tag assigned to each tunnel, parameters associated with each tunnel, a rule for identifying each tunnel and information elements, IEs, defined in a message that references at least one tunnel; and
   initiating at least one modification of tunnel information according to whether a tunnel is the first tunnel or the second tunnel.
Embodiment B2. The network node of Embodiment B1, wherein a tag is explicitly assigned at a time of creation of the first and second tunnels.
Embodiment B3. The network node of Embodiment B 1, wherein the parameters include an uplink or downlink transport network layer, TNL
Embodiment B4. The network node of Embodiment B 1, wherein the rule is specified at a time of creation of the first and second tunnels.
Embodiment B5. The network node of Embodiment B1, wherein the network node is a wireless device.
Embodiment B6. The network node of Embodiment B1, wherein the network node is a base station.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:

### Abbreviation Explanation

- 5GC: 5G Core
- DC: Dual Connectivity
- MN: Master Node (M-NG-RAN node)
- M-NG-RAN node: Master NG-RAN node
- NR: New Radio, 5G
- SN: Secondary Node (S-NG-RAN node)
- S-NG-RAN node: Secondary NG-RAN node
- UPF: User Plane Function

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A radio network node (16) comprising processing circuitry (68) and an interface (60, 62) configured to:
transmit to a core network node (14) a first message that includes a Transport Network Layer, TNL, address for a downlink tunnel in a protocol data unit, PDU, session, which PDU session being split in a user plane function, UPF, into two transport tunnels; and
receive from the core network node (14) a reply message that includes an uplink, UL, transport layer address corresponding to the TNL address for the downlink tunnel;
wherein the processing circuitry (68) and interface (60, 62) are further configured to receive in the reply message from the core network node (14) an indication of a mapping of TNL addresses to corresponding UL transport layer addresses for identification of said two transport tunnels.

2. The radio network node (16) of Claim 1, wherein the received UL transport layer address identifies a tunnel to the radio network node (16).

3. The radio network node (16) of any of Claims 1-2, wherein the first message includes a resource modification indication message that includes the TNL address.

4. The radio network node (16) of Claim 3, wherein the resource modification indication message includes UL NG-U UP TNL information.

5. The radio network node (16) of any of Claims 1-4 wherein the reply message includes a resource modify confirmation message that includes the UL transport layer address.

6. The radio network node (16) of Claim 5, wherein the resource modify confirmation message includes DL NG-U UP TNL information.

7. A method implemented in a radio network node (16), the method comprising:
transmitting (S134) to a core network node (14) a first message that includes a Transport Network Layer, TNL, address for a downlink tunnel in a protocol data unit, PDU, session, which PDU session being split in a user plane function, UPF, into two transport tunnels;; and
receiving (S136) from the core network node (14) a reply message that includes an uplink, UL, transport layer address corresponding to the TNL address for the downlink tunnel; and
further comprising receiving in the reply message from the core network node (14) an indication of a mapping of TNL addresses to corresponding UL transport layer addresses for identification of said two transport tunnels.

8. The method of Claim 7, wherein the received UL transport layer address identifies a tunnel to the radio network node (16).

9. The method of any of Claims 7-8, wherein the first message includes a resource modification indication message that includes the TNL address.

10. The method of Claim 9, wherein the resource modification indication message includes UL NG-U UP TNL information.

11. The method of any of Claim 7-10 wherein the reply message includes a resource modify confirmation message that includes the UL transport layer address.

12. The method of Claim 11, wherein the resource modify confirmation message includes DL NG-U UP TNL information.

13. A core network node (14) comprising processing circuitry (104) and an interface (102) configured to:
receive from a radio network node (16) a first message that includes a Transport Network Layer, TNL, address for a downlink tunnel in a protocol data unit, PDU, session, which PDU session being split in a user plane function, UPF, into two transport tunnels; and
transmit to the radio network node (16) a reply message that includes an uplink, UL, transport layer address corresponding to the TNL address for the downlink tunnel;
wherein the reply message includes an indication of a mapping of TNL addresses to corresponding UL transport layer addresses for identification of said two transport tunnels.

14. The core network node (14) of Claim 13, wherein the transmitted UL transport layer address identifies a tunnel to the radio network node (16).

15. The core network node (14) of any of Claims 13-14, wherein the first message includes a resource modification indication message that includes the TNL address.

16. The core network node (14) of Claim 15, wherein the resource modification indication message includes UL NG-U UP TNL information.

17. The core network node (14) of any of Claims 13-16 wherein the reply message includes a resource modify confirmation message that includes the UL transport layer address.

18. The core network node (14) of Claim 17, wherein the resource modify confirmation message includes DL NG-U UP TNL information.

19. A method in a core network node (14), the method comprising:
receiving (S138) from a radio network node (16) a first message that includes a Transport Network Layer, TNL, address for a downlink tunnel in a protocol data unit, PDU, session, which PDU session being split in a user plane function, UPF, into two transport tunnels;; and
transmitting (S140) to the radio network node (16) a reply message that includes an uplink, UL, transport layer address corresponding to the TNL address for the downlink tunnel;
wherein the reply message includes an indication of a mapping of TNL addresses to corresponding UL transport layer addresses for identification of said two transport tunnels.

20. The method of Claim 19, wherein the transmitted UL transport layer address identifies a tunnel to the radio network node (16).

21. The method of any of Claims 19-20, wherein the first message includes a resource modification indication message that includes the TNL address.

22. The method of Claim 21, wherein the resource modification indication message includes UL NG-U UP TNL information.

23. The method of any of Claims 19-22, wherein the reply message includes a resource modify confirmation message that includes the UL transport layer address.

24. The method of Claim 23, wherein the resource modify confirmation message includes DL NG-U UP TNL information.

## Patentansprüche

1. Funknetzwerkknoten (16), umfassend Verarbeitungsschaltkreise (68) und eine Schnittstelle (60, 62), konfiguriert zum:
Übertragen einer ersten Nachricht, die eine Transportnetzwerkschicht-, TNL, Adresse für einen Abwärtsstreckentunnel in einer Protokolldateneinheit-, PDU, Sitzung beinhaltet, an einen Kernnetzwerkknoten (14), wobei die PDU-Sitzung in einer Anwenderebenenfunktion, UPF, in zwei Transporttunnel geteilt ist; und
Empfangen von dem Kernnetzwerkknoten (14) einer Antwortnachricht, die eine Aufwärtsstrecken-, UL, Transportschichtadresse entsprechend der TNL-Adresse für den Abwärtsstreckentunnel beinhaltet;
wobei die Verarbeitungsschaltkreise (68) und Schnittstelle (60, 62) weiter dazu konfiguriert sind, in der Antwortnachricht von dem Kernnetzwerkknoten (14) eine Anzeige einer Abbildung von TNL-Adressen auf entsprechende UL-Transportschichtadressen zur Identifizierung der zwei Transporttunnel zu empfangen.

2. Funknetzwerkknoten (16) nach Anspruch 1, wobei die empfangene UL-Transportschichtadresse einen Tunnel zu dem Funknetzwerkknoten (16) identifiziert.

3. Funknetzwerkknoten (16) nach einem der Ansprüche 1-2, wobei die erste Nachricht eine Ressourcenmodifikationsanzeigenachricht beinhaltet, die die TNL-Adresse beinhaltet.

4. Funknetzwerkknoten (16) nach Anspruch 3, wobei die Ressourcenmodifikationsanzeigenachricht UL NG-U UP TNL Informationen beinhaltet.

5. Funknetzwerkknoten (16) nach einem der Ansprüche 1-4, wobei die Antwortnachricht eine Ressourcenmodifikationsbestätigungsnachricht beinhaltet, die die UL-Transportschichtadresse beinhaltet.

6. Funknetzwerkknoten (16) nach Anspruch 5, wobei die Ressourcenmodifikationsbestätigungsnachricht DL NG-U UP TNL Informationen beinhaltet.

7. Verfahren, das in einem Funknetzwerkknoten (16) implementiert ist, wobei das Verfahren umfasst:
Übertragen (S134) einer ersten Nachricht, die eine Transportnetzwerkschicht-, TNL, Adresse für einen Abwärtsstreckentunnel in einer Protokolldateneinheit-, PDU, Sitzung beinhaltet, an einen Kernnetzwerkknoten (14), wobei die PDU-Sitzung in einer Anwenderebenenfunktion, UPF, in zwei Transporttunnel geteilt ist; und
Empfangen (S136) von dem Kernnetzwerkknoten (14) einer Antwortnachricht, die eine Aufwärtsstrecken-, UL, Transportschichtadresse entsprechend der TNL-Adresse für den Abwärtsstreckentunnel beinhaltet; und
weiter umfassend Empfangen in der Antwortnachricht von dem Kernnetzwerkknoten (14) einer Anzeige einer Abbildung von TNL-Adressen auf entsprechende UL-Transportschichtadressen zur Identifizierung der zwei Transporttunnel.

8. Verfahren nach Anspruch 7, wobei die empfangene UL-Transportschichtadresse einen Tunnel zu dem Funknetzwerkknoten (16) identifiziert.

9. Verfahren nach einem der Ansprüche 7-8, wobei die erste Nachricht eine Ressourcenmodifikationsanzeigenachricht beinhaltet, die die TNL-Adresse beinhaltet.

10. Verfahren nach Anspruch 9, wobei die Ressourcenmodifikationsanzeigenachricht UL NG-U UP TNL Informationen beinhaltet.

11. Verfahren nach einem der Ansprüche 7-10, wobei die Antwortnachricht eine Ressourcenmodifikationsbestätigungsnachricht beinhaltet, die die UL-Transportschichtadresse beinhaltet.

12. Verfahren nach Anspruch 11, wobei die Ressourcenmodifikationsbestätigungsnachricht DL NG-U UP TNL Informationen beinhaltet.

13. Kernnetzwerkknoten (14), umfassend Verarbeitungsschaltkreise (104) und eine Schnittstelle (102), konfiguriert zum:
Empfangen von einem Funknetzwerkknoten (16) einer ersten Nachricht, die eine Transportnetzwerkschicht-, TNL, Adresse für einen Abwärtsstreckentunnel in einer Protokolldateneinheit-, PDU, Sitzung beinhaltet, wobei die PDU-Sitzung in einer Anwenderebenenfunktion, UPF, in zwei Transporttunnel geteilt ist; und
Übertragen an den Funknetzwerkknoten (16) einer Antwortnachricht, die eine Aufwärtsstrecken-, UL, Transportschichtadresse entsprechend der TNL-Adresse für den Abwärtsstreckentunnel beinhaltet;
wobei die Antwortnachricht eine Anzeige einer Abbildung von TNL-Adressen auf entsprechende UL-Transportschichtadressen zur Identifizierung der zwei Transporttunnel beinhaltet.

14. Kernnetzwerkknoten (14) nach Anspruch 13, wobei die übertragene UL-Transportschichtadresse einen Tunnel zu dem Funknetzwerkknoten (16) identifiziert.

15. Kernnetzwerkknoten (14) nach einem der Ansprüche 13-14, wobei die erste Nachricht eine Ressourcenmodifikationsanzeigenachricht beinhaltet, die die TNL-Adresse beinhaltet.

16. Kernnetzwerkknoten (14) nach Anspruch 15, wobei die Ressourcenmodifikationsanzeigenachricht UL NG-U UP TNL Informationen beinhaltet.

17. Kernnetzwerkknoten (14) nach einem der Ansprüche 13-16, wobei die Antwortnachricht eine Ressourcenmodifikationsbestätigungsnachricht beinhaltet, die die UL-Transportschichtadresse beinhaltet.

18. Kernnetzwerkknoten (14) nach Anspruch 17, wobei die Ressourcenmodifikationsbestätigungsnachricht DL NG-U UP TNL Informationen beinhaltet.

19. Verfahren in einem Kernnetzwerkknoten (14), wobei das Verfahren umfasst:
Empfangen (S138) von einem Funknetzwerkknoten (16) einer ersten Nachricht, die eine Transportnetzwerkschicht-, TNL, Adresse für einen Abwärtsstreckentunnel in einer Protokolldateneinheit-, PDU, Sitzung beinhaltet, wobei die PDU-Sitzung in einer Anwenderebenenfunktion, UPF, in zwei Transporttunnel geteilt ist; und
Übertragen (S140) einer Antwortnachricht, die eine Aufwärtsstrecken-, UL, Transportschichtadresse entsprechend der TNL-Adresse für den Abwärtsstreckentunnel beinhaltet, an den Funknetzwerkknoten (16);
wobei die Antwortnachricht eine Anzeige einer Abbildung von TNL-Adressen auf entsprechende UL-Transportschichtadressen zur Identifizierung der zwei Transporttunnel beinhaltet.

20. Verfahren nach Anspruch 19, wobei die übertragene UL-Transportschichtadresse einen Tunnel zu dem Funknetzwerkknoten (16) identifiziert.

21. Verfahren nach einem der Ansprüche 19-20, wobei die erste Nachricht eine Ressourcenmodifikationsanzeigenachricht beinhaltet, die die TNL-Adresse beinhaltet.

22. Verfahren nach Anspruch 21, wobei die Ressourcenmodifikationsanzeigenachricht UL NG-U UP TNL Informationen beinhaltet.

23. Verfahren nach einem der Ansprüche 19-22, wobei die Antwortnachricht eine Ressourcenmodifikationsbestätigungsnachricht beinhaltet, die die UL-Transportschichtadresse beinhaltet.

24. Verfahren nach Anspruch 23, wobei die Ressourcenmodifikationsbestätigungsnachricht DL NG-U UP TNL Informationen beinhaltet.

## Revendications

1. Nœud de réseau radio (16) comprenant des circuits de traitement (68) et une interface (60, 62) configurée pour :
transmettre à un nœud de réseau d'infrastructure (14) un premier message qui inclut une adresse de couche de réseau de transport, TNL, pour un tunnel de liaison descendante dans une session d'unité de données de protocole, PDU, laquelle session PDU étant divisée dans une fonction de plan utilisateur, UPF, en deux tunnels de transport ; et
recevoir en provenance du nœud de réseau d'infrastructure (14) un message de réponse qui inclut une adresse de couche de transport de liaison montante, UL, correspondant à l'adresse TNL pour le tunnel de liaison descendante ;
dans lequel les circuits de traitement (68) et l'interface (60, 62) sont en outre configurés pour recevoir dans le message de réponse en provenance du nœud de réseau d'infrastructure (14) une indication d'une cartographie d'adresses TNL à des adresses de couche de transport UL correspondantes pour l'identification desdits deux tunnels de transport.

2. Nœud de réseau radio (16) selon la revendication 1, dans lequel l'adresse de couche de transport UL reçue identifie un tunnel vers le nœud de réseau radio (16).

3. Nœud de réseau radio (16) selon l'une quelconque des revendications 1-2, dans lequel le premier message inclut un message d'indication de modification de ressource qui inclut l'adresse TNL.

4. Nœud de réseau radio (16) selon la revendication 3, dans lequel le message d'indication de modification de ressource inclut des informations UL NG-U UP TNL.

5. Nœud de réseau radio (16) selon l'une quelconque des revendications 1-4, dans lequel le message de réponse inclut un message de confirmation de modification de ressource qui inclut l'adresse de couche de transport UL.

6. Nœud de réseau radio (16) selon la revendication 5, dans lequel le message de confirmation de modification de ressource inclut des informations DL NG-U UP TNL.

7. Procédé mis en œuvre dans un nœud de réseau radio (16), le procédé comprenant :
la transmission (S134) à un nœud de réseau d'infrastructure (14) d'un premier message qui inclut une adresse de couche de réseau de transport, TNL, pour un tunnel de liaison descendante dans une session d'unité de données de protocole, PDU, laquelle session PDU étant divisée dans une fonction de plan utilisateur, UPF, en deux tunnels de transport ; et
la réception (S136) en provenance du nœud de réseau d'infrastructure (14) d'un message de réponse qui inclut une adresse de couche de transport de liaison montante, UL, correspondant à l'adresse TNL pour le tunnel de liaison descendante ; et
comprenant en outre la réception dans le message de réponse en provenance du nœud de réseau d'infrastructure (14) d'une indication d'une cartographie d'adresses TNL à des adresses de couche de transport UL correspondantes pour l'identification desdits deux tunnels de transport.

8. Procédé selon la revendication 7, dans lequel l'adresse de couche de transport UL reçue identifie un tunnel vers le nœud de réseau radio (16).

9. Procédé selon l'une quelconque des revendications 7-8, dans lequel le premier message inclut un message d'indication de modification de ressource qui inclut l'adresse TNL.

10. Procédé selon la revendication 9, dans lequel le message d'indication de modification de ressource inclut des informations UL NG-U UP TNL.

11. Procédé selon l'une quelconque des revendications 7-10, dans lequel le message de réponse inclut un message de confirmation de modification de ressource qui inclut l'adresse de couche de transport UL.

12. Procédé selon la revendication 11, dans lequel le message de confirmation de modification de ressource inclut des informations UL NG-U UP TNL.

13. Nœud de réseau d'infrastructure (14) comprenant des circuits de traitement (104) et une interface (102) configurée pour :
recevoir en provenance d'un nœud de réseau radio (16) un premier message qui inclut une adresse de couche de réseau de transport, TNL, pour un tunnel de liaison descendante dans une session d'unité de données de protocole, PDU, laquelle session PDU étant divisée dans une fonction de plan utilisateur, UPF, en deux tunnels de transport ; et
transmettre à un nœud de réseau radio (16) un message de réponse qui inclut une adresse de couche de transport de liaison montante, UL, correspondant à l'adresse TNL pour le tunnel de liaison descendante ;
dans lequel le message de réponse inclut une indication d'une cartographie d'adresses TNL à des adresses de couche de transport UL correspondantes pour l'identification desdits deux tunnels de transport.

14. Nœud de réseau d'infrastructure (14) selon la revendication 13, dans lequel l'adresse de couche de transport UL transmise identifie un tunnel vers le nœud de réseau radio (16).

15. Nœud de réseau d'infrastructure (14) selon l'une quelconque des revendications 13-14, dans lequel le premier message inclut un message d'indication de modification de ressource qui inclut l'adresse TNL.

16. Nœud de réseau d'infrastructure (14) selon la revendication 15, dans lequel le message d'indication de modification de ressource inclut des informations UL NG-U UP TNL.

17. Nœud de réseau d'infrastructure (14) selon l'une quelconque des revendications 13-16, dans lequel le message de réponse inclut un message de confirmation de modification de ressource qui inclut l'adresse de couche de transport UL.

18. Nœud de réseau d'infrastructure (14) selon la revendication 17, dans lequel le message de confirmation de modification de ressource inclut des informations DL NG-U UPTNL.

19. Procédé dans un nœud de réseau d'infrastructure (14), le procédé comprenant :
la réception (S138) en provenance d'un nœud de réseau radio (16) d'un premier message qui inclut une adresse de couche de réseau de transport, TNL, pour un tunnel de liaison descendante dans une session d'unité de données de protocole, PDU, laquelle session PDU étant divisée dans une fonction de plan utilisateur, UPF, en deux tunnels de transport ; et
la transmission (S140) à un nœud de réseau radio (16) d'un message de réponse qui inclut une adresse de couche de transport de liaison montante, UL, correspondant à l'adresse TNL pour le tunnel de liaison descendante ;
dans lequel le message de réponse inclut une indication d'une cartographie d'adresses TNL à des adresses de couche de transport UL correspondantes pour l'identification desdits deux tunnels de transport.

20. Procédé selon la revendication 19, dans lequel l'adresse de couche de transport UL transmise identifie un tunnel vers le nœud de réseau radio (16).

21. Procédé selon l'une quelconque des revendications 19-20, dans lequel le premier message inclut un message d'indication de modification de ressource qui inclut l'adresse TNL.

22. Procédé selon la revendication 21, dans lequel le message d'indication de modification de ressource inclut des informations UL NG-U UP TNL.

23. Procédé selon l'une quelconque des revendications 19-22, dans lequel le message de réponse inclut un message de confirmation de modification de ressource qui inclut l'adresse de couche de transport UL.

24. Procédé selon la revendication 23, dans lequel le message de confirmation de modification de ressource inclut des informations UL NG-U UP TNL.
